(19) Europäisches Patentamt / European Patent Office / Office européen des brevets

(11) **EP 4 579 688 A1**

(12) **EUROPEAN PATENT APPLICATION**
published in accordance with Art. 153(4) EPC

(43) Date of publication:
**02.07.2025 Bulletin 2025/27**

(21) Application number: **23856978.4**

(22) Date of filing: **30.06.2023**

(51) International Patent Classification (IPC):
$H01B\ 1/06^{(2006.01)}$  $C04B\ 35/50^{(2006.01)}$
$C01F\ 17/36^{(2020.01)}$  $H01M\ 4/62^{(2006.01)}$
$H01M\ 10/052^{(2010.01)}$  $H01M\ 10/0562^{(2010.01)}$
$H01M\ 10/0585^{(2010.01)}$

(52) Cooperative Patent Classification (CPC):
C01F 17/36; C04B 35/50; H01B 1/06; H01M 4/62;
H01M 10/052; H01M 10/0562; H01M 10/0585;
Y02E 60/10; Y02P 70/50

(86) International application number:
**PCT/JP2023/024409**

(87) International publication number:
**WO 2024/042861 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 JP 2022132609**

(71) Applicant: **Panasonic Intellectual Property
Management Co., Ltd.
Kadoma-shi, Osaka 571-0057 (JP)**

(72) Inventors:
• **WADA ,Tomokatsu
  Kadoma-shi, Osaka 571-0057 (JP)**
• **SAGARA, Akihiko
  Kadoma-shi, Osaka 571-0057 (JP)**

(74) Representative: **Novagraaf International SA
Chemin de l'Echo 3
1213 Onex, Geneva (CH)**

(54) **SOLID ELECTROLYTE, BATTERY, METHOD FOR MANUFACTURING SOLID ELECTROLYTE, AND METHOD FOR MANUFACTURING BATTERY**

(57)     A solid electrolyte 10 according to the present disclosure has a composition represented by the following formula (1): $Li_{\alpha}M_{\beta}X_{\gamma}I_{\delta}$ Formula (1). In the formula (1), M includes at least one selected from the group consisting of metalloid elements and metal elements other than Li, X includes at least one selected from the group consisting of F, Cl, and Br, $0 < \alpha$, $0 < \beta$, $0 \leq \gamma$, and $0 < \delta$ are satisfied. In an X-ray diffraction pattern of the solid electrolyte obtained by X-ray diffraction measurement using Cu-K$\alpha$ radiation, a peak having a full width at half maximum of 0.10° or more and 0.55° or less is present within a diffraction angle 2$\theta$ range from 31° to 32°.

FIG. 1

EP 4 579 688 A1

**Description**

TECHNICAL FIELD

The present disclosure relates to a solid electrolyte, a battery, a method for manufacturing a solid electrolyte, and a method for manufacturing a battery.

BACKGROUND ART

Patent Literature 1 discloses a halide that includes iodine and can be used as a solid electrolyte material.

CITATION LIST

Patent Literature

Patent Literature 1: WO 2020/136952 A1

SUMMARY OF INVENTION

Technical Problem

The ionic conductivity of a solid electrolyte may decrease over time depending on the environment in which the solid electrolyte is placed. The present disclosure aims to provide a solid electrolyte in which the decrease in ionic conductivity is suppressed.

Solution to Problem

The present disclosure provides a solid electrolyte having a composition represented by the following formula (1):

$$Li_\alpha M_\beta X_\gamma I_\delta \qquad \text{Formula (1)}$$

in the formula (1),

M includes at least one selected from the group consisting of metalloid elements and metal elements other than Li,

X includes at least one selected from the group consisting of F, Cl, and Br,

$$0 < \alpha,$$

$$0 < \beta,$$

$$0 \leq \gamma,$$

and

$$0 < \delta$$

are satisfied, and
in an X-ray diffraction pattern of the solid electrolyte obtained by X-ray diffraction measurement using Cu-K$\alpha$ radiation, a peak having a full width at half maximum of 0.10° or more and 0.55° or less is present within a diffraction angle 2$\theta$ range from 31° to 32°.

Advantageous Effects of Invention

According to the present disclosure, it is possible to provide a solid electrolyte in which the decrease in ionic conductivity is suppressed.

BRIEF DESCRIPTION OF DRAWINGS

FIG. 1 is a cross-sectional view schematically showing the configuration of a solid electrolyte according to Embodiment 1.

FIG. 2 is a flowchart showing an example of a method for manufacturing the solid electrolyte according to Embodiment 1.

FIG. 3 is a cross-sectional view schematically showing the configuration of a battery according to Embodiment 2.

FIG. 4 is a flowchart showing an example of a method for manufacturing the battery according to Embodiment 2.

FIG. 5 is a cross-sectional view schematically showing the configuration of a solid electrolyte produced in Examples.

FIG. 6 is a graph showing a Cole-Cole plot obtained by impedance measurement of the solid electrolyte of Example 1.

FIG. 7 is a graph showing the X-ray diffraction patterns of the solid electrolytes of Example 1 and Comparative Example 1.

FIG. 8A is a graph showing the X-ray diffraction patterns ($30° \leq 2\theta \leq 33°$) of the solid electrolytes of Example 1 and Comparative Example 1 after a high-temperature retention test.

FIG. 8B is a graph showing the X-ray diffraction patterns ($40° \leq 2\theta \leq 44°$) of the solid electrolytes of Example 1 and Comparative Example 1 after the high-temperature retention test.

DESCRIPTION OF EMBODIMENTS

(Findings underlying the present disclosure)

Halide solid electrolytes including iodine as halogen are known to have higher ionic conductivity at 25°C than halide solid electrolytes free of iodine.

On the other hand, the present inventors, as a result of intensive studies, have found that exposing halide solid electrolytes including iodine to a high-temperature environment greatly reduces their ionic conductivity. Consequently, the present inventors have come to conceive of the solid electrolyte of the present disclosure.

Embodiments of the present disclosure will be described below with reference to the drawings. The present disclosure is not limited to the following embodiments.

(Embodiment 1)

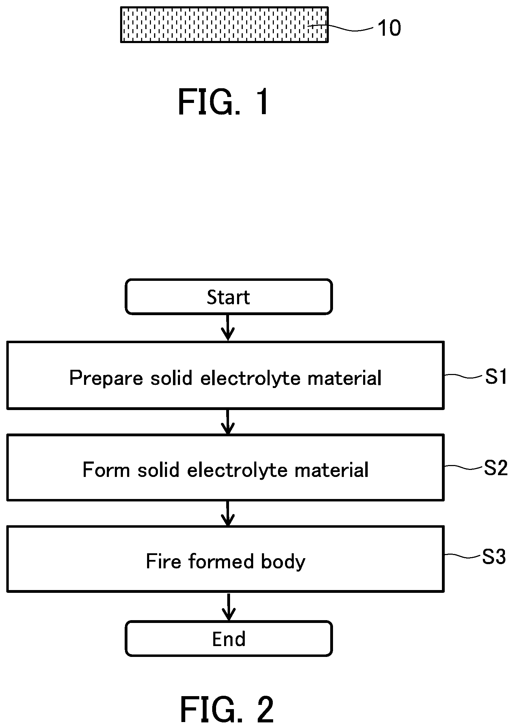

FIG. 1 is a cross-sectional view schematically showing the configuration of a solid electrolyte 10 according to Embodiment 1. The solid electrolyte 10 according to Embodiment 1 has a composition represented by the following formula (1).

$$\text{Li}_\alpha \text{M}_\beta \text{X}_\gamma \text{I}_\delta \quad \text{Formula} \qquad (1)$$

In the formula (1), M includes at least one selected from the group consisting of metalloid elements and metal elements other than Li; X includes at least one selected from the group consisting of F, Cl, and Br; and $0 < \alpha$, $0 < \beta$, $0 \leq \gamma$, and $0 < \delta$ are satisfied. The solid electrolyte 10 is a halide solid electrolyte including iodine as halogen.

In the present disclosure, "metalloid elements" include B, Si, Ge, As, Sb, and Te. "Metal elements" include all the elements included in Groups 1 to 12 of the periodic table except hydrogen and all the elements included in Groups 13 to 16 of the periodic table except B, Si, Ge, As, Sb, Te, C, N, P, O, S, and Se. In other words, "metalloid elements and metal elements" are a group of elements that can become cations when forming an inorganic compound with halogen.

The solid electrolyte 10 has higher ionic conductivity than halide solid electrolytes such as LiI, consisting of Li and halogen. Therefore, using the solid electrolyte 10 in a battery can improve the output characteristics of a battery.

In the X-ray diffraction pattern of the solid electrolyte 10 obtained by X-ray diffraction measurement, a peak having a full width at half maximum (FWHM) of 0.10° or more and 0.55° or less is present within a diffraction angle $2\theta$ range from 31° to 32°. The peak having a full width at half maximum (FWHM) of 0.10° or more and 0.55° or less can be the peak having the highest intensity present within the diffraction angle $2\theta$ range from 31° to 32°. In the present specification, X-ray diffraction measurements are performed using Cu-K$\alpha$ radiation.

Halide solid electrolytes including iodine decompose when exposed to high-temperature environments, generating LiI. LiI contributes little to ionic conduction. Therefore, as decomposition progresses, the ionic conductivity of the solid electrolyte decreases. The decomposition of the solid electrolyte gradually progresses from the surfaces of the particles of the solid electrolyte toward the interior.

The full width at half maximum (FWHM) of an X-ray diffraction peak correlates with the crystallite size of the material. The smaller the full width at half maximum (FWHM), the larger the crystallite size and the higher the crystallinity. The presence of a peak having a full width at half maximum (FWHM) of 0.10° or more and 0.55° or less within the diffraction angle 2θ range from 31° to 32° means that the crystallite size of the solid electrolyte 10 is relatively large. In the case where the crystallite size is relatively large, the particle size of the solid electrolyte also tends to be large. As the particle size of the solid electrolyte increases, the specific surface area of the particle group of the solid electrolyte decreases. In the case where the specific surface area of the particle group of the solid electrolyte is small, the solid electrolyte 10 is less prone to decomposition, and the decrease in ionic conductivity can also be suppressed. Furthermore, in the case where the crystallite size is relatively large, the transformation from a crystal structure to an amorphous structure and/or the occurrence of distortion of the crystal structure can be suppressed. In other words, the crystal structure of the solid electrolyte 10 is stable. Even the stability of the crystal structure can suppress decomposition.

The full width at half maximum (FWHM) of the peak described above may be 0.10° or more and 0.40° or less, and is more preferably 0.10° or more and 0.30° or less. In other words, in the X-ray diffraction pattern of the solid electrolyte 10 obtained by X-ray diffraction measurement, a peak having a full width at half maximum (FWHM) of 0.20° or more and 0.40° or less may be present within the diffraction angle 2θ range from 31° to 32°. According to such a configuration, it is possible to provide the solid electrolyte 10 in which the decrease in ionic conductivity is further suppressed.

In the formula (1), M may include yttrium (Y). In other words, the solid electrolyte 10 may include Y as a metal element. According to such a configuration, it is possible to improve the ionic conductivity of the solid electrolyte 10.

In the formula (1), M may include Y, X may be represented by $Br_{\gamma 1} Cl_{\gamma 2}$, and $2.5 \leq \alpha \leq 3.5$, $0.5 \leq \beta \leq 1.5$, $0 \leq \gamma 1 < 6$, $0 \leq \gamma 2 < 6$, $0 < \delta \leq 6$, and $\gamma 1 + \gamma 2 + \delta = 6$ may be satisfied. According to such a configuration, it is possible to further improve the ionic conductivity of the solid electrolyte 10.

In the formula (1), M may include Y, X may be represented by $Br_{\gamma 1} Cl_{\gamma 2}$, and $\alpha = 3$, $\beta = 1$, $0 < \gamma 1 < 6$, $0 < \gamma 2 < 6$, and $0 < \delta < 6$ may be satisfied. According to such a configuration, it is possible to further improve the ionic conductivity of the solid electrolyte 10.

In the formula (1), M may include Y, X may be represented by $Br_{\gamma 1} Cl_{\gamma 2}$, and $\alpha = 3$, $\beta = 1$, $\gamma 1 = 2$, $\gamma 2 = 2$, and $\delta = 2$ may be satisfied. In other words, the solid electrolyte 10 may have a composition represented by $Li_3YBr_2Cl_2I_2$.

The solid electrolyte 10 may have a composition represented by, for example, $Li_{4.5}Y_{0.6}Br_2Cl_2I_2$, $Li_{1.5}Y_{1.5}Br_2Cl_2I_2$, $Li_3YBr_{2.35}Cl_2I_{1.65}$, $Li_3YBr_2Cl_3I$, $Li_3YBr_2Cl_{3.5}I_{0.5}$, $Li_3YBrCl_4I$, $Li_3YBrCl_{4.5}I_{0.5}$, $Li_3YBr_{0.5}Cl_5I_{0.5}$, $Li_3YCl_4BrI$, $Li_3YCl_3Br_2I$, $Li_3YCl_3BrI_2$, $Li_3YCl_2Br_3I$, $Li_3YCl_2BrI_3$, $Li_3YClBr_4I$, $Li_3YClBr_3I_2$, $Li_3YClBr_2I_3$, $Li_3YClBrI_4$, $Li_3YCl_2Br_{2.35}I_{1.65}$, $Li_{1.5}Y_{1.5}Cl_2Br_2I_2$, $Li_3YCl_{3.5}Br_2I_{0.5}$, $Li_3YCl_{4.5}BrI_{0.5}$, or $Li_3YCl_5Br_{0.5}I_{0.5}$.

The solid electrolyte 10 may include inevitable impurities, such as oxygen, water, and raw materials. The composition excluding inevitable impurities may be represented by the formula (1).

In the X-ray diffraction pattern of the solid electrolyte 10 after undergoing a high-temperature retention test, the ratio of an area intensity $I_d$ to an area intensity $I_m$, $I_d/I_m$, may be 0.01 or more and 0.70 or less. Here, the area intensity $I_m$ is the peak area of a peak present within the diffraction angle 2θ range from 31° to 32°. The area intensity $I_d$ is the peak area of a peak present within a diffraction angle 2θ range from 42° to 43°. The high-temperature retention test is a test in which the solid electrolyte 10 is retained in an environment of 100°C or more and 150°C or less for 100 hours. The temperature of "100°C or more and 150°C" refers to the ambient temperature.

The peak present within the diffraction angle 2θ range from 31° to 32° is a peak attributed to the solid electrolyte 10. The peak present within the diffraction angle 2θ range from 42° to 43° is a peak attributed to LiI generated from decomposition of the solid electrolyte 10. Accordingly, the ratio $I_d/I_m$ can be an indicator of the progression of the decomposition of the solid electrolyte 10. The ratio $I_d/I_m$ of 0.01 or more and 0.70 or less indicates that the decomposition of the solid electrolyte 10 is suppressed.

The ratio $I_d/I_m$ may be 0.30 or more and 0.60 or less. According to such a configuration, the solid electrolyte 10 in which the decrease in ionic conductivity is suppressed is more reliably achieved.

The area intensity $I_m$ and the area intensity $I_d$ can be determined by the following method. First, the data of the X-ray diffraction pattern is fitted using a Gaussian function or a Lorentzian function. During the fitting, noise is removed by smoothing the data. From the data after the fitting, the area intensity $I_m$ and the area intensity $I_d$ are determined.

The solid electrolyte 10 may be in the form of a formed body. The solid electrolyte 10 may be formed into a formed body together with another material of a battery, for example, an active material.

<Method for manufacturing solid electrolyte>

A method for manufacturing the solid electrolyte 10 will be described. FIG. 2 is a flowchart showing an example of the method for manufacturing the solid electrolyte 10.

First, a solid electrolyte material is prepared (Step S1). The solid electrolyte material obtained is in powder form. Examples of a method for preparing the solid electrolyte material include a firing method and a mechanochemical milling method. In the present specification, "solid electrolyte material" refers to the material after being synthesized and before being subjected to heat treatment (Step S3).

In the firing method, mixed materials are fired at a temperature of 200°C or more and 650°C or less. The firing can be performed in a vacuum or in an inert gas atmosphere. Examples of inert gases include nitrogen gas and noble gases.

In the mechanochemical milling method, the mixed materials are reacted with each other in a mixer, such as a planetary ball mill.

By these methods, a solid electrolyte material having a composition represented by the following formula (1) is obtained.

$$\text{Li}_\alpha \text{M}_\beta \text{X}_\gamma \text{I}_\delta \text{ Formula} \qquad (1)$$

In the formula (1), M includes at least one selected from the group consisting of metalloid elements and metal elements other than Li; X includes at least one selected from the group consisting of F, Cl, and Br; and $0 < \alpha$, $0 < \beta$, $0 \leq \gamma$, and $0 < \delta$ are satisfied.

The mixed materials used in Step S1 are obtained by mixing raw material powders prepared to achieve a target composition. The raw material powders are, for example, LiBr, LiI, $\text{YBr}_3$, and $\text{YCl}_3$. In one example where the target composition is $\text{Li}_3 \text{YBr}_2 \text{Cl}_2 \text{I}_2$, the mixing is performed in a molar ratio of $\text{LiBr:LiI:YBr}_3\text{:YCl}_3 = 1:2:0.33:0.67$. The raw material powders may be mixed in a molar ratio adjusted in advance so as to cancel out a composition change that can occur in the synthesis process.

In the firing method, in the case where the firing temperature is 200°C or more, the mixed materials can be sufficiently reacted with each other. Furthermore, by setting the firing temperature to 650°C or less, it is possible to suppress the thermal decomposition of a halide generated through the solid-phase reaction. This can improve the ionic conductivity of the solid electrolyte material produced.

In the firing method, for example, the mixed materials in powder form are placed in a container and fired in a heating furnace. The container is, for example, a crucible. The firing time is, for example, 15 minutes to 12 hours.

In the firing method, the mixed materials may be fired at a temperature of 200°C or more and less than 500°C. In the case where the firing temperature is less than 500°C, the thermal decomposition of the halide can be further suppressed. By performing the firing at a temperature of less than 500°C, which is the melting point of the LiI included in the mixed materials, it is possible to suppress the decomposition of the LiI before the solid-phase reaction is completed. This can more reliably synthesize the solid electrolyte material having the composition represented by the formula (1).

In the firing method, the mixed materials may be fired at a temperature of 380°C or more and less than 500°C. In the case where the firing temperature is 380°C or more, the crystallinity of the solid electrolyte material can be improved. The improvement in the crystallinity improves the ionic conductivity of the solid electrolyte material.

Next, the solid electrolyte material is formed to obtain a formed body (Step S2).

In Step S2, the solid electrolyte material may be pressure formed to produce a formed body. The formed body is not limited to a particular shape, and has, for example, a plate shape. The temperature for the pressure forming is, for example, room temperature (25°C) or more and less than 500°C. The pressure for the pressure forming is, for example, 10 MPa to 720 MPa. The time for the pressure forming is, for example, 5 seconds to 1 hour. Step S2 is performed preferably in a vacuum or in an inert gas atmosphere.

In the case where the pressure forming in Step S2 is performed at a temperature of 200°C or more and less than 500°C, Step S3, which will be described later, can be omitted.

The formed body obtained in Step S2 has a filling ratio of, for example, 80% or more. The upper limit for the filling ratio of the formed body obtained in Step S2 is not limited to a particular value. The upper limit is, for example, 99.5%. The filling ratio of the formed body can be determined by the following formula (2).

$$\text{Filling ratio (\%)} = 100 - \text{porosity (\%)} \qquad \text{Formula (2)}$$

The porosity can be determined, for example, by the following method. First, a cross section of the formed body is exposed and the cross section is observed using a scanning electron microscope (SEM). In the cross-sectional SEM image, the total area of the void portions in the formed body is divided by the total area of the formed body including the voids. Thus, the porosity can be determined.

Finally, the formed body is fired at a temperature of 200°C more and less than 500°C (Step S3). Thus, the solid electrolyte 10 is obtained. Step S3 can be performed in a vacuum or in an inert gas atmosphere.

The firing time in Step S3 is, for example, 15 minutes to 12 hours.

The firing temperature in Step S3 is more preferably 250°C or more and less than 350°C (ambient temperature). According to such a configuration, it is possible to manufacture the solid electrolyte 10 in which the decrease in ionic conductivity is further suppressed.

As described above, it is possible to obtain the solid electrolyte 10 by heat-treating the formed body of the solid electrolyte material having the composition represented by the formula (1). The composition of the solid electrolyte material does not change before and after the above heat treatment. In the solid electrolyte 10 manufactured by the method described above, the decrease in ionic conductivity is suppressed. This is presumably because the crystal structure of the solid electrolyte material, altered through the pressure forming in Step S2, has approached its original state through the firing in Step S3. In other words, this is presumably because the firing in Step S3 has led to an increase in the crystallite size of the solid electrolyte material.

(Embodiment 2)

A battery 100 according to Embodiment 2 will be described below. The description overlapping that of Embodiment 1 will be omitted as appropriate.

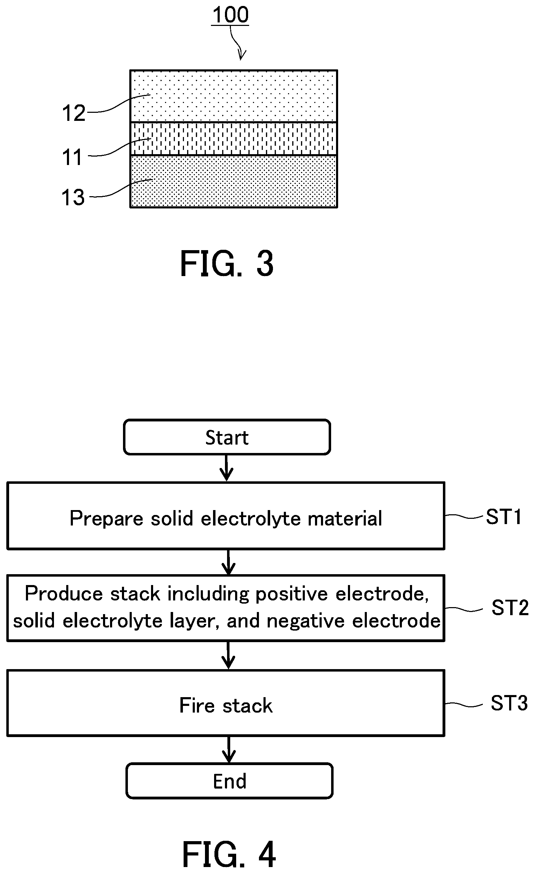

FIG. 3 is a cross-sectional view schematically showing the configuration of the battery 100 according to Embodiment 2. The battery 100 includes a positive electrode 12, a negative electrode 13, and a solid electrolyte layer 11 disposed between the positive electrode 12 and the negative electrode 13. At least one selected from the group consisting of the positive electrode 12, the negative electrode 13, and the solid electrolyte layer 11 includes the solid electrolyte 10 according to Embodiment 1. In the solid electrolyte 10, the decrease in ionic conductivity is suppressed, and therefore the battery 100 can have excellent charge and discharge characteristics.

According to the above mechanism, a desired effect is obtained regardless of whether the solid electrolyte 10 is included in any of the positive electrode 12, the negative electrode 13, and the solid electrolyte layer 11.

The solid electrolyte 10 may be included in only one, two, or all three selected from the group consisting of the positive electrode 12, the negative electrode 13, and the solid electrolyte layer 11.

In the present embodiment, the solid electrolyte layer 11 is in contact with the positive electrode 12 and with the negative electrode 13.

The solid electrolyte 10 may be included in the solid electrolyte layer 11. In the case where the solid electrolyte 10 is included in the solid electrolyte layer 11, the charge and discharge characteristics of the battery 100 are further improved.

The solid electrolyte layer 11 may include the solid electrolyte 10 in 100 mass% with respect to the entire solid electrolyte layer 11 on a mass basis, except for inevitably incorporated impurities. In other words, the solid electrolyte layer 11 may consist substantially of the solid electrolyte 10. The solid electrolyte layer 11 may be the solid electrolyte 10 itself.

The solid electrolyte layer 11 may include the solid electrolyte 10 as the main component and further include inevitable impurities, or starting materials used in the synthesis of the solid electrolyte 10, by-products, decomposition products, and the like. The ratio of the mass of the solid electrolyte 10 to the mass of the solid electrolyte layer 11 may be, for example, 50 mass% or more, or 70 mass% or more.

The positive electrode 12 includes, for example, as the positive electrode active material, a material having properties of occluding and releasing metal ions (e.g., lithium ions). As the positive electrode active material, lithium-containing transition metal oxides, lithium-containing transition metal phosphates, transition metal fluorides, polyanion materials, fluorinated polyanion materials, transition metal sulfides, transition metal oxysulfides, and transition metal oxynitrides, for example, can be used. Examples of lithium-containing transition metal oxides include $Li(Ni,Co,Al)O_2$, $Li(Ni,Co,Mn)O_2$, and $LiCoO_2$. In particular, in the case where a lithium-containing transition metal oxide is used as the positive electrode active material, it is possible to reduce the manufacturing cost and enhance the average discharge voltage of the battery 100.

In the present disclosure, "(Ni,Co,Al)" indicates at least one element selected from the group of elements in parentheses. In other words, "(Ni,Co,Al)" is synonymous with "at least one selected from the group consisting of Ni, Co, and Al". The same applies to other elements.

The positive electrode 12 may include an electrolyte material, and may include, for example, a solid electrolyte. The solid electrolyte that may be included in the positive electrode 12 may include a halide solid electrolyte.

The halide solid electrolyte may be a sulfur-free compound. In the case where sulfur is not included, the generation of hydrogen sulfide can be prevented.

The positive electrode 12 may include, as the halide solid electrolyte, the solid electrolyte 10 according to Embodiment 1. According to the above configuration, it is possible to further improve the output characteristics of the battery 100.

In addition to the halide solid electrolyte, sulfide solid electrolytes, oxide solid electrolytes, polymer solid electrolytes, complex hydride solid electrolytes, or the like can be used in the positive electrode 12.

Examples of sulfide solid electrolytes include $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, and $Li_{10}GeP_2S_{12}$. To these, LiX, $Li_2O$, $MO_q$, $Li_pMO_q$, or the like may be added, where X is at least one selected from the group consisting of F, Cl, Br, and I; M is at least one selected from the group consisting of P, Si, Ge, B, Al, Ga, In, Fe, and Zn; and p and q are each a natural number. One or two or more sulfide solid electrolytes selected from the above materials can be used.

Examples of oxide solid electrolytes include NASICON-type solid electrolytes typified by $LiTi_2(PO_4)_3$ and element-substituted substances thereof, $(LaLi)TiO_3$-based perovskite-type solid electrolytes, LISICON-type solid elec-

trolytes typified by $Li_{14}ZnGe_4O_{16}$, $Li_4SiO_4$, and $LiGeO_4$, and element-substituted substances thereof, garnet-type solid electrolytes typified by $Li_7La_3Zr_2O_{12}$ and element-substituted substances thereof, $Li_3PO_4$ and N-substituted substances thereof, and glass or glass ceramics based on a Li-B-O compound, such as $LiBO_2$ or $Li_3BO_3$, to which $Li_2SO_4$, $Li_2CO_3$, or the like is added. One or two or more oxide solid electrolytes selected from the above materials can be used.

The polymer solid electrolyte can be, for example, a compound of a polymer compound and a lithium salt. The polymer compound may have an ethylene oxide structure. The polymer compound having an ethylene oxide structure can contain a lithium salt in a large amount. Consequently, the ionic conductivity can be further enhanced. Examples of lithium salts include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)$ $(SO_2C_4F_9)$, and $LiC(SO_2CF_3)_3$. One lithium salt may be used alone, or two or more lithium salts may be used in combination.

Examples of complex hydride solid electrolytes include $LiBH_4$-LiI and $LiBH_4$-$P_2S_5$.

The negative electrode 13 includes, for example, as the negative electrode active material, a material having properties of occluding and releasing metal ions (e.g., lithium ions). The negative electrode active material can be a metal material, a carbon material, an oxide, a nitride, a tin compound, a silicon compound, or the like. The metal material may be a simple substance of metal. The metal material may be an alloy. Examples of the metal material include lithium metal and a lithium alloy. Examples of the carbon material include natural graphite, coke, partially graphitized carbon, carbon fiber, spherical carbon, artificial graphite, and amorphous carbon. Using silicon (Si), tin (Sn), a silicon compound, a tin compound, or the like can improve capacity density. Examples of the oxide include $Li_4Ti_5O_{12}$, $LiTi_2O_4$, and $TiO_2$.

The negative electrode 13 may include an electrolyte material, and may include, for example, a solid electrolyte. The solid electrolyte that may be included in the negative electrode 13 may include a halide solid electrolyte.

The negative electrode 13 may include, as the halide solid electrolyte, the solid electrolyte 10 according to Embodiment 1. According to the above configuration, it is possible to further improve the output characteristics of the battery 100.

As the solid electrolyte that may be included in the negative electrode 13, in addition to the halide solid electrolyte, sulfide solid electrolytes, oxide solid electrolytes, polymer solid electrolytes, and complex hydride solid electrolytes, for example, can be used. Even according to the above configuration, it is possible to improve the output characteristics of the battery 100. As the sulfide solid electrolytes, the oxide solid electrolytes, the polymer solid electrolytes, and the complex hydride solid electrolytes, the materials exemplified as the solid electrolytes that may be included in the positive electrode 12 can be used.

<Method for manufacturing battery>

A method for manufacturing the battery 100 will be described. FIG. 4 is a flowchart showing an example of the method for manufacturing the battery 100.

First, a solid electrolyte material is prepared (Step ST1). The solid electrolyte material obtained is in powder form. Step ST1 is the same step as Step S1 in the method for manufacturing the solid electrolyte 10, and accordingly, the description is omitted.

Next, a stack including the positive electrode 12, the solid electrolyte layer 11, and the negative electrode 13 is produced (ST2). Examples of a method for producing a stack include a wet method and a dry method.

In a wet method, for example, a stack can be produced by the following method. First, a positive electrode slurry including a solid electrolyte material and a positive electrode active material is prepared, and a negative electrode slurry including a solid electrolyte material and a negative electrode active material is prepared. The positive electrode slurry is applied onto a positive electrode current collector and is dried. The negative electrode slurry is applied onto a current collector and is dried. The coating films may be pressed as necessary. Thus, the positive electrode 12 and the negative electrode 13 are obtained. The solid electrolyte layer 11 can be obtained by applying a slurry including a solid electrolyte material onto a substrate and drying the slurry. The solid electrolyte layer 11 can be obtained also by forming a thin film of a solid electrolyte material on a substrate by sputtering or vapor deposition, and drying the thin film. Next, the solid electrolyte layer 11 is disposed between the positive electrode 12 and the negative electrode 13, and these are pressure formed into an integrated body. Thus, the stack is formed.

The solid electrolyte layer 11 may be formed by applying a slurry including a solid electrolyte material onto a surface of the positive electrode 12. The stack may be formed by disposing the negative electrode 13 on the solid electrolyte layer 11 formed on the surface of the positive electrode 12, and pressure forming these into an integrated body. The solid electrolyte layer 11 may be formed by applying a slurry including a solid electrolyte material onto a surface of the negative electrode 13. The stack may be formed by disposing the positive electrode 12 on the solid electrolyte layer 11 formed on the surface of the negative electrode 13, and pressure forming these into an integrated body. The solid electrolyte layer 11 may be formed by applying a slurry including a solid electrolyte material onto respective surfaces of the positive electrode 12 and the negative electrode 13. The stack may be formed by bringing the solid electrolyte layer 11 formed on the surface of the positive electrode 12 and the solid electrolyte layer 11 formed on the surface of the negative electrode 13 into contact with each other, and pressure forming these into an integrated body.

In the case where a wet method is employed, Step ST1 includes a heat treatment to dry each coating film. The temperature for the heat treatment is appropriately set according to the solvent used. After the heat treatment, a stack including the positive electrode 12, the solid electrolyte layer 11, and the negative electrode 13 is produced.

In a dry method, a stack can be produced, for example, by the following method. First, a lower die is inserted into an insulating tube, followed by placing the solid electrolyte material. An upper die is inserted into the insulating tube, and the solid electrolyte material is pressed to form the solid electrolyte layer 11. The upper die is removed, and a positive electrode material including a solid electrolyte material and a positive electrode active material is placed in the insulating tube. The upper die is reinserted into the insulating tube, and the positive electrode material is pressed to form the positive electrode 12 on top of the solid electrolyte layer 11. After the positive electrode 12 is formed, the lower die is removed, and a negative electrode material including a solid electrolyte material and a negative electrode active material is placed in the insulating tube. The lower die is reinserted, and the negative electrode material is pressed to form the negative electrode 13. Thus, the stack is formed.

The stack obtained in Step ST2 has a filling ratio of, for example, 80% or more. The upper limit for the filling ratio of the stack obtained in Step ST2 is not limited to a particular value. The upper limit is, for example, 99.5%. The filling ratio of the stack can be determined by the same method as the method for the filling ratio of the formed body.

In general, sulfide solid electrolytes and polymer solid electrolytes have lower heat resistance than halide solid electrolytes. Therefore, in view of the firing temperature in Step ST3, which is performed after Step ST2, it is desirable that the positive electrode 12, the solid electrolyte layer 11, and the negative electrode 13 should be free of a sulfide solid electrolyte and a polymer solid electrolyte.

Finally, the stack is fired at a temperature of 200°C or more and less than 500°C (Step ST3). Thus, the battery 100 is obtained. Step ST3 is the same step as Step S3 in the method for manufacturing the solid electrolyte 10, except that the stack is fired instead of the formed body. Accordingly, the description is omitted.

In the example described above, the positive electrode 12, the solid electrolyte layer 11, and the negative electrode 13 all include the solid electrolyte 10. Alternatively, it is sufficient that at least one selected from the group consisting of the positive electrode 12, the solid electrolyte layer 11, and the negative electrode 13 includes the solid electrolyte 10.

As the solid electrolyte layer 11, the solid electrolyte 10 itself according to Embodiment 1 may be used. For example, in the case where only the solid electrolyte layer 11 includes the solid electrolyte 10, Step ST3 can be omitted by using the solid electrolyte 10 itself as the solid electrolyte layer 11.

(Other embodiments)

(Supplementary description)

The above description of the embodiments discloses the following techniques.

(Technique 1)

A solid electrolyte having a composition represented by the following formula (1):

$$Li_\alpha M_\beta X_\gamma I_\delta \qquad \text{Formula (1)}$$

in the formula (1),

M includes at least one selected from the group consisting of metalloid elements and metal elements other than Li,
X includes at least one selected from the group consisting of F, Cl, and Br,

$$0 < \alpha,$$

$$0 < \beta,$$

$$0 \leq \gamma,$$

and

$$0 < \delta$$

are satisfied, and
in an X-ray diffraction pattern of the solid electrolyte obtained by X-ray diffraction measurement using Cu-K$\alpha$ radiation, a peak having a full width at half maximum of 0.10° or more and 0.55° or less is present within a diffraction angle $2\theta$ range from 31° to 32°.

In the solid electrolyte according to Technique 1, the decrease in ionic conductivity is suppressed.

(Technique 2)

The solid electrolyte according to Technique 1, wherein in the formula (1), M includes Y. According to such a configuration, it is possible to improve the ionic conductivity of the solid electrolyte.

(Technique 3)

The solid electrolyte according to Technique 1 or 2, wherein in the formula (1), X is represented by $Br_{\gamma 1}Cl_{\gamma 2}$, and $2.5 \le \alpha \le 3.5$, $0.5 \le \beta \le 1.5$, $0 \le \gamma 1 < 6$, $0 \le \gamma 2 < 6$, $0 < \delta \le 6$, and $\gamma 1 + \gamma 2 + \delta = 6$ are satisfied. According to such a configuration, it is possible to further improve the ionic conductivity of the solid electrolyte.

(Technique 4)

A battery including: a positive electrode; a negative electrode; and a solid electrolyte layer disposed between the positive electrode and the negative electrode, wherein at least one selected from the group consisting of the positive electrode, the negative electrode, and the solid electrolyte layer includes the solid electrolyte according to any one of Techniques 1 to 3.
The battery according to Technique 4 can have excellent charge and discharge characteristics owing to the solid electrolyte in which the decrease in ionic conductivity is suppressed.

(Technique 5)

A method for manufacturing a solid electrolyte, the method including:

forming a solid electrolyte material to obtain a formed body; and
firing the formed body at a temperature of 200°C or more and less than 500°C, wherein
the solid electrolyte material has a composition represented by the following formula (1):

$$Li_{\alpha}M_{\beta}X_{\gamma}I_{\delta} \qquad \text{Formula (1)}$$

in the formula (1),
M includes at least one selected from the group consisting of metalloid elements and metal elements other than Li,
X includes at least one selected from the group consisting of F, Cl, and Br, and

$$0 < \alpha,$$

$$0 < \beta,$$

$$0 \le \gamma,$$

and

$$0 < \delta$$

are satisfied.
According to the manufacturing method according to Technique 5, it is possible to manufacture a solid electrolyte in which the decrease in ionic conductivity is suppressed.

(Technique 6)

The method according to Technique 5, wherein in the formula (1), X is represented by $Br_{\gamma 1}Cl_{\gamma 2}$, and $2.5 \leq \alpha \leq 3.5$, $0.5 \leq \beta \leq 1.5$, $0 \leq \gamma 1 < 6$, $0 \leq \gamma 2 < 6$, $0 < \delta \leq 6$, and $\gamma 1 + \gamma 2 + \delta = 6$ are satisfied. According to such a configuration, it is possible to further improve the ionic conductivity of the solid electrolyte.

(Technique 7)

The method according to Technique 5 or 6, wherein the formed body has a filling ratio of 80% or more. According to such a configuration, it is possible to improve the ionic conductivity of the solid electrolyte.

(Technique 8)

The method according to any one of Techniques 5 to 7, further including preparing the solid electrolyte material by mixing and firing a raw material powder. According to such a configuration, it is possible to improve the ionic conductivity of the solid electrolyte.

(Technique 9)

A method for manufacturing a battery, the method including:

producing a stack in which a positive electrode, a solid electrolyte layer, and a negative electrode are disposed in this order; and
firing the stack at a temperature of 200°C or more and less than 500°C, wherein
at least one selected from the group consisting of the positive electrode, the negative electrode, and the solid electrolyte layer includes a solid electrolyte material,
the solid electrolyte material has a composition represented by the following formula (1):

$$Li_{\alpha}M_{\beta}X_{\gamma}I_{\delta} \qquad \text{Formula (1)}$$

in the formula (1),
M includes at least one selected from the group consisting of metalloid elements and metal elements other than Li,
X includes at least one selected from the group consisting of F, Cl, and Br, and

$$0 < \alpha,$$

$$0 < \beta,$$

$$0 \leq \gamma,$$

and

$$0 < \delta$$

are satisfied.

According to the manufacturing method according to Technique 9, it is possible to manufacture a battery that can have excellent charge and discharge characteristics owing to the solid electrolyte in which the decrease in ionic conductivity is suppressed.

(Technique 10)

The method according to Technique 9, wherein in the formula (1), X is represented by $Br_{\gamma 1}Cl_{\gamma 2}$, and $2.5 \leq \alpha \leq 3.5$, $0.5 \leq \beta \leq 1.5$, $0 \leq \gamma 1 < 6$, $0 \leq \gamma 2 < 6$, $0 < \delta \leq 6$, and $\gamma 1 + \gamma 2 + \delta = 6$ are satisfied. According to such a configuration, it is possible to further improve the ionic conductivity of the solid electrolyte.

(Technique 11)

The method according to Technique 9 or 10, wherein the stack has a filling ratio of 80% or more. According to such a configuration, it is possible to improve the ionic conductivity of the solid electrolyte.

(Technique 12)

The method according to any one of Techniques 9 to 11, further including preparing the solid electrolyte material included in the positive electrode, the solid electrolyte layer, and the negative electrode, by mixing and firing a raw material powder. According to such a configuration, it is possible to improve the ionic conductivity of the solid electrolyte.

Examples

The present disclosure will be described in detail below with reference to an example and a comparative example.

[Production of solid electrolyte material]

In a glove box with an argon atmosphere and a dew point of -60°C or less, raw material powders LiBr, LiI, $YBr_3$, and $YCl_3$ were weighed in a molar ratio of $LiBr:LiI:YBr_3:YCl_3 = 1:2:0.33:0.67$. These raw material powders were pulverized and mixed in an agate mortar to obtain mixed materials. Next, the mixed materials obtained were placed in an alumina crucible, the temperature of the alumina crucible was raised to 440°C, and the mixed materials were fired for 1 hour. The resulting fired product was pulverized using an agate mortar. Thus, a powder of a solid electrolyte material represented by the composition formula of $Li_3YBr_2Cl_2I_2$ was obtained.

[Production of solid electrolyte]

<<Example 1>>

An amount of 150 mg of the powder of the solid electrolyte material produced according to the method described above was pressure formed at room temperature at a pressure of 720 MPa for 5 minutes. Thus, the formed body of Example 1 was produced. The filling ratio calculated by the method described above was 99%.
Next, the formed body obtained was placed on a SUS-made hot plate, the temperature of the hot plate was raised to 300°C, and the formed body was fired for 1 hour. Thus, the solid electrolyte of Example 1 was obtained. The solid electrolyte of Example 1 had a disk shape with dimensions of 9.2 mm in diameter and approximately 600 $\mu$m in thickness.

<<Comparative Example 1>>

The pressure-formed solid electrolyte of Comparative Example 1 was produced by the same method as the method for the solid electrolyte of Example 1, except that firing after pressure forming was omitted. The solid electrolyte of Comparative Example 1 had a disk shape with dimensions of 9.2 mm in diameter and approximately 600 $\mu$m in thickness.

(Evaluation of ionic conductivity)

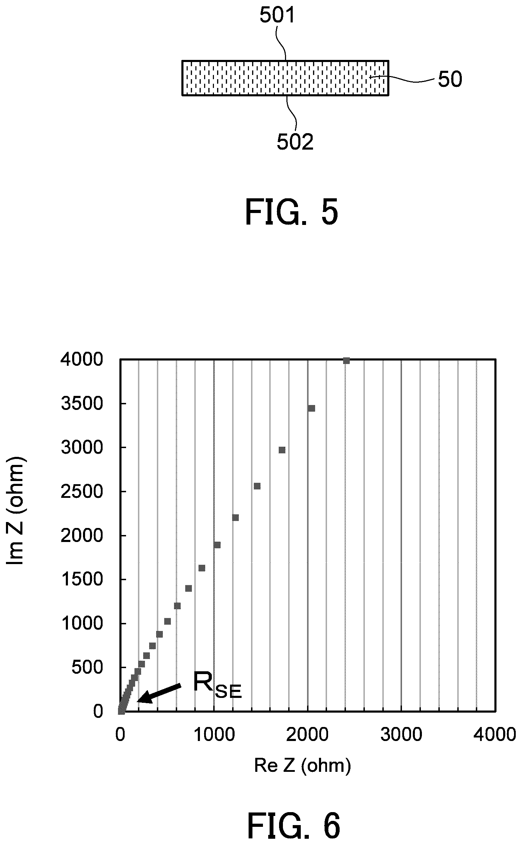

FIG. 5 is a cross-sectional view schematically showing the configuration of a solid electrolyte 50 produced in Examples. First, both principal surfaces 501 and 502 of the solid electrolyte 50 were each brought into contact with an SUS-made pin. Next, an impedance analyzer was connected to the tip of each pin, and the solid electrolyte 50 was maintained at room temperature. Under this state, the ionic conductivity of the solid electrolyte 50 was measured. For the measurement of the ionic conductivity, the complex impedance method was used.
FIG. 6 is a graph showing a Cole-Cole plot obtained by impedance measurement of the solid electrolyte of Example 1. In FIG. 6, the vertical axis represents the imaginary component of the impedance, and the horizontal axis represents the real component of the impedance.
In FIG. 6, the real value of the complex impedance at the measurement point where the absolute value of the phase of the complex impedance was smallest was regarded as the resistance value of the solid electrolyte to ionic conduction. For the real value, see an arrow $R_{SE}$ shown in FIG. 6. The ionic conductivity was calculated from the resistance value by the following mathematical formula (3).

$$\sigma = (R_{SE} \times S/t)^{-1} \quad \text{Formula (3)}$$

In the mathematical formula (3), $\sigma$ represents the ionic conductivity; S represents the area of the principal surface of the solid electrolyte; $R_{SE}$ represents the resistance value of the solid electrolyte in the impedance measurement; and t represents the thickness of the solid electrolyte.

Based on the mathematical formula (3), the ionic conductivity of the solid electrolyte of Example 1 and Comparative Example 1 was calculated. The results are shown in the following Table 1.

(X-ray diffraction measurement)

X-ray diffraction measurements were performed on the solid electrolytes of Example 1 and Comparative Example 1. For the X-ray diffraction measurements, a powder X-ray diffractometer (MiniFlex 600, manufactured by Rigaku Corporation) was used. The measurement conditions were as follows.

X-ray source: Cu-K$\alpha$ radiation (wavelength: 0.15406 nm)
Measurement range: $2\theta = 10°$ to $80°$
Sampling step width: $0.01°$
Scanning speed: $10°$/min

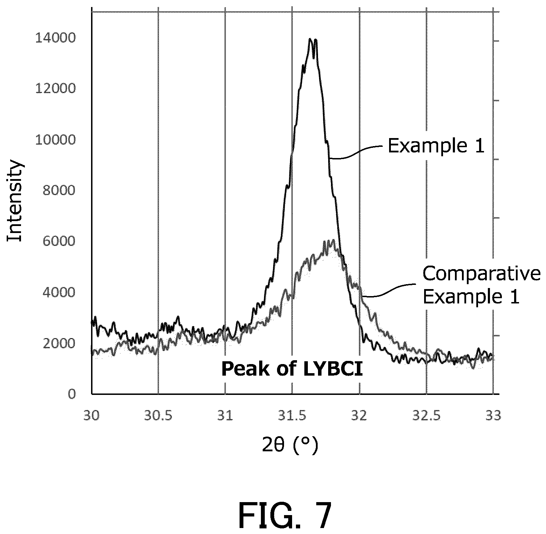

FIG. 7 is a graph showing the X-ray diffraction patterns of the solid electrolytes of Example 1 and Comparative Example 1, obtained by the X-ray diffraction measurements. Based on FIG. 7, the full width at half maximum (FWHM) of a peak of the solid electrolyte, which is the peak having the highest intensity within the diffraction angle $2\theta$ range from $31°$ to $32°$, was calculated for Example 1 and Comparative Example 1. The results are shown in the following Table 1.

(High-temperature retention test)

Next, a high-temperature retention test was performed on the solid electrolytes of Example 1 and Comparative Example 1 under the following conditions.

First, the solid electrolyte was maintained in an environment of 125°C for 100 hours. After 100 hours, the solid electrolyte was naturally cooled to 25°C.

The ionic conductivities of the solid electrolytes of Example 1 and Comparative Example 1 after the high-temperature retention test were calculated by the method described above. Based on the ionic conductivities before and after the high-temperature retention test, the ionic conductivity retention rate after the high-temperature retention test was calculated. The results are shown in the following Table 1.

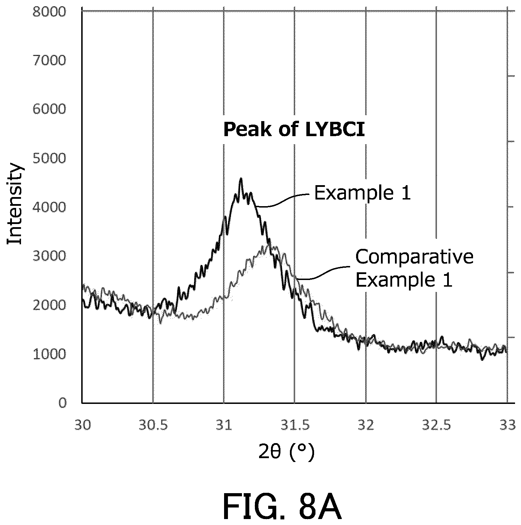

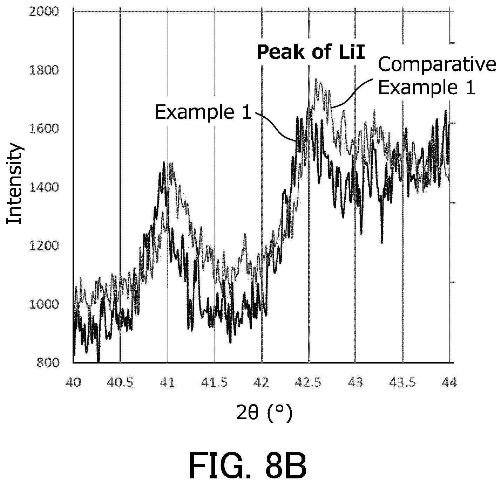

Furthermore, X-ray diffraction measurements were performed on the solid electrolytes of Example 1 and Comparative Example 1 after the high-temperature retention test by the method described above. FIG. 8A and FIG. 8B are graphs showing the X-ray diffraction patterns of the solid electrolytes of Example 1 and Comparative Example 1 after the high-temperature retention test. FIG. 8A shows the $2\theta$ range from $30°$ to $33°$. FIG. 8B shows the $2\theta$ range from $40°$ to $44°$. Based on FIG. 8A and FIG. 8B, the ratio $I_d/I_m$ was calculated for the solid electrolytes of Example 1 and Comparative Example 1. The peak present within the diffraction angle $2\theta$ range from $31°$ to $32°$ was a peak of the solid electrolyte. In other words, the area intensity $I_m$ represented the peak area of the peak of the solid electrolyte. The peak present within the diffraction angle $2\theta$ range from $42°$ to $43°$ was a peak of LiI generated by the decomposition of the solid electrolyte. In other words, the area intensity $I_d$ represented the peak area of the peak of the LiI. Data fitting, smoothing, and calculation of each area intensity were performed using software supplied with a powder X-ray diffractometer (MiniFlex 600, manufactured by Rigaku Corporation). The results are shown in the following Table 1.

[Table 1]

| | Before high-temperature retention test | After high-temperature retention test | | Before high-temperature retention test | After high-temperature retention test |
|---|---|---|---|---|---|
| | Ionic conductivity (mS/cm) | Ionic conductivity (mS/cm) | Ionic conductivity retention rate (%) | FWHM (°) | $I_d/I_m$ |
| Example 1 | 4.7 | 2.6 | 56 | 0.35 | 0.51 |

(continued)

| | Before high-temperature retention test | After high-temperature retention test | | Before high-temperature retention test | After high-temperature retention test |
|---|---|---|---|---|---|
| | Ionic conductivity (mS/cm) | Ionic conductivity (mS/cm) | Ionic conductivity retention rate (%) | FWHM (°) | $I_d/I_m$ |
| Comparative Example 1 | 4.7 | 1.2 | 25 | 0.59 | 0.74 |

<<Consideration>>

The ionic conductivity retention rate of the solid electrolyte of Example 1 greatly exceeded the ionic conductivity retention rate of the solid electrolyte of Comparative Example 1. This indicates that, in Example 1, the decrease in ionic conductivity caused by the high-temperature retention test was suppressed. The ratio $I_d/I_m$ in Example 1 after the high-temperature retention test was lower than that in Comparative Example 1. It was demonstrated that the decrease in ionic conductivity is suppressed when the full width at half maximum (FWHM) of a peak present within the diffraction angle $2\theta$ range from 31° to 32° is 0.10° or more and 0.55° or less.

In Example 1, the formed body of the solid electrolyte material having the composition represented by the composition formula (1) was fired at a temperature of 200°C or more and less than 500°C. This is presumed to have increased the crystallite size in the solid electrolyte and to have stabilized the crystal structure, thereby suppressing the progression of decomposition.

In the above Examples, the solid electrolyte represented by $Li_3YBr_2Cl_2I_2$ was used to evaluate ionic conductivity and the like. However, it is presumed that the comparable effect is obtained even by using, instead of Y, at least one selected from the group consisting of metalloid elements and metal elements other than Li, for example, a lanthanoid element (e.g., La, Ce, Pr, Nd, Sm, Eu, Gd, Tb, Dy, Ho, Er, Tm, Yb, or Lu). This is because lanthanoid elements have electron configurations similar to the electron configuration of yttrium and also have atomic radii close to the atomic radius of yttrium, and therefore, can adopt structures similar to the structure of yttrium.

INDUSTRIAL APPLICABILITY

The solid electrolyte of the present disclosure can be used, for example, in on-board lithium-ion secondary batteries.

**Claims**

1. A solid electrolyte having a composition represented by the following formula (1):

$$Li_\alpha M_\beta X_\gamma I_\delta \qquad \text{Formula (1)}$$

in the formula (1),

M includes at least one selected from the group consisting of metalloid elements and metal elements other than Li,
X includes at least one selected from the group consisting of F, Cl, and Br,

$$0 < \alpha,$$

$$0 < \beta,$$

$$0 \leq \gamma,$$

and

**13**

$$0 < \delta$$

are satisfied, and
in an X-ray diffraction pattern of the solid electrolyte obtained by X-ray diffraction measurement, a peak having a full width at half maximum of 0.10° or more and 0.55° or less is present within a diffraction angle 2θ range from 31° to 32°.

2. The solid electrolyte according to claim 1, wherein

in the formula (1),
M includes Y.

3. The solid electrolyte according to claim 1, wherein

in the formula (1),
X is represented by $Br_{\gamma 1}Cl_{\gamma 2}$, and

$$2.5 \leq \alpha \leq 3.5,$$

$$0.5 \leq \beta \leq 1.5,$$

$$0 \leq \gamma 1 < 6,$$

$$0 \leq \gamma 2 < 6,$$

$$0 < \delta \leq 6,$$

and

$$\gamma 1 + \gamma 2 + \delta = 6$$

are satisfied.

4. A battery comprising:

a positive electrode;
a negative electrode; and
a solid electrolyte layer disposed between the positive electrode and the negative electrode, wherein
at least one selected from the group consisting of the positive electrode, the negative electrode, and the solid electrolyte layer includes the solid electrolyte according to any one of claims 1 to 3.

5. A method for manufacturing a solid electrolyte, the method comprising:

forming a solid electrolyte material to obtain a formed body; and
firing the formed body at a temperature of 200°C or more and less than 500°C, wherein
the solid electrolyte material has a composition represented by the following formula (1):

$$Li_{\alpha}M_{\beta}X_{\gamma}I_{\delta} \qquad \text{Formula (1)}$$

in the formula (1),
M includes at least one selected from the group consisting of metalloid elements and metal elements other than Li,
X includes at least one selected from the group consisting of F, Cl, and Br, and

$$0 < \alpha,$$

$$0 < \beta,$$

$$0 \leq \gamma,$$

and

$$0 < \delta$$

are satisfied.

6. The method according to claim 5, wherein

in the formula (1),
X is represented by $Br_{\gamma 1}Cl_{\gamma 2}$, and

$$2.5 \leq \alpha \leq 3.5,$$

$$0.5 \leq \beta \leq 1.5,$$

$$0 \leq \gamma 1 < 6,$$

$$0 \leq \gamma 2 < 6,$$

$$0 < \delta \leq 6,$$

and

$$\gamma 1 + \gamma 2 + \delta = 6$$

are satisfied.

7. The method according to claim 5, wherein
the formed body has a filling ratio of 80% or more.

8. The method according to claim 5, further comprising
preparing the solid electrolyte material by mixing and firing a raw material powder.

9. A method for manufacturing a battery, the method comprising:

producing a stack in which a positive electrode, a solid electrolyte layer, and a negative electrode are disposed in this order; and
firing the stack at a temperature of 200°C or more and less than 500°C, wherein
at least one selected from the group consisting of the positive electrode, the negative electrode, and the solid electrolyte layer includes a solid electrolyte material,
the solid electrolyte material has a composition represented by the following formula (1):

$$Li_{\alpha}M_{\beta}X_{\gamma}I_{\delta} \qquad \text{Formula (1)}$$

in the formula (1),
M includes at least one selected from the group consisting of metalloid elements and metal elements other than Li,
X includes at least one selected from the group consisting of F, Cl, and Br, and

$$0 < \alpha,$$

$$0 < \beta,$$

$$0 \leq \gamma,$$

and

$$0 < \delta$$

are satisfied.

10. The method according to claim 9, wherein

in the formula (1),
X is represented by $Br_{\gamma 1}Cl_{\gamma 2}$, and

$$2.5 \leq \alpha \leq 3.5,$$

$$0.5 \leq \beta \leq 1.5,$$

$$0 \leq \gamma 1 < 6,$$

$$0 \leq \gamma 2 < 6,$$

$$0 < \delta \leq 6,$$

and

$$\gamma 1 + \gamma 2 + \delta = 6$$

are satisfied.

11. The method according to claim 9, wherein
the stack has a filling ratio of 80% or more.

12. The method according to claim 9, further comprising
preparing the solid electrolyte material included in the positive electrode, the solid electrolyte layer, and the negative electrode, by mixing and firing a raw material powder.

10

# FIG. 1

Start

Prepare solid electrolyte material — S1

Form solid electrolyte material — S2

Fire formed body — S3

End

# FIG. 2

100

12

11

13

## FIG. 3

```
              Start
                │
                ▼
   Prepare solid electrolyte material          ST1
                │
                ▼
 Produce stack including positive electrode,    ST2
 solid electrolyte layer, and negative electrode
                │
                ▼
            Fire stack                          ST3
                │
                ▼
               End
```

## FIG. 4

501

50

502

FIG. 5

FIG. 6

FIG. 7

FIG. 8A

FIG. 8B

## INTERNATIONAL SEARCH REPORT

| International application No. |
|---|
| **PCT/JP2023/024409** |

**A.    CLASSIFICATION OF SUBJECT MATTER**

*H01B 1/06*(2006.01)i; *C04B 35/50*(2006.01)i; *C01F 17/36*(2020.01)i; *H01M 4/62*(2006.01)i; *H01M 10/052*(2010.01)i; *H01M 10/0562*(2010.01)i; *H01M 10/0585*(2010.01)i

FI:    H01B1/06 A; C04B35/50; C01F17/36; H01M10/0562; H01M10/052; H01M4/62 Z; H01M10/0585

According to International Patent Classification (IPC) or to both national classification and IPC

**B.    FIELDS SEARCHED**

Minimum documentation searched (classification system followed by classification symbols)

H01B1/06; C04B35/50; C01F17/36; H01M4/62; H01M10/052; H01M10/0562; H01M10/0585

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/136952 A1 (PANASONIC INTELLECTUAL PROPERTY MANAGEMENT CO., LTD.) 02 July 2020 (2020-07-02) <br>       paragraph [0068] | 1-4 |
| Y | | 5-12 |
| Y | WO 2017/141735 A1 (FUJIFILM CORP.) 24 August 2017 (2017-08-24) <br>       paragraph [0098] | 5-12 |

☐ Further documents are listed in the continuation of Box C.        ☑ See patent family annex.

| | |
|---|---|
| *       Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **24 August 2023** | **05 September 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/024409**

| Patent document cited in search report | | | Publication date (day/month/year) | Patent family member(s) | | | Publication date (day/month/year) |
|---|---|---|---|---|---|---|---|
| WO | 2020/136952 | A1 | 02 July 2020 | US | 2021/0269320 | A1 | |
| | | | | paragraph [0094] | | | |
| | | | | US | 2021/0273259 | A1 | |
| | | | | US | 2021/0280907 | A1 | |
| | | | | WO | 2020/137026 | A1 | |
| | | | | WO | 2020/137156 | A1 | |
| | | | | EP | 3905268 | A1 | |
| | | | | EP | 3905273 | A1 | |
| | | | | EP | 3905276 | A1 | |
| | | | | CN | 112771627 | A | |
| | | | | CN | 112789692 | A | |
| | | | | CN | 112840412 | A | |
| WO | 2017/141735 | A1 | 24 August 2017 | US | 2018/0309167 | A1 | |
| | | | | paragraphs [0227], [0228] | | | |
| | | | | EP | 3419098 | A1 | |
| | | | | CN | 108475817 | A | |
| | | | | KR | 10-2018-0093091 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020136952 A1